# EUROPÄISCHE PATENTSCHRIFT

(11) **EP 2 628 223 B1**
(45) Veröffentlichungstag und Bekanntmachung des Hinweises auf die Patenterteilung: **31.05.2017**
(21) Anmeldenummer: 11770086.4
(22) Anmeldetag: 10.10.2011
(51) Int. Cl.: H02H 7/122

(54) **SCHALTUNGSANORDNUNG ZUM BETREIBEN EINER ELEKTRISCHEN LAST, STEUERVORRICHTUNG ZUR ANSTEUERUNG EINES ANTRIEBSMOTORS EINES HAUSGERÄTS, HAUSGERÄT UND VERFAHREN ZUM BETREIBEN EINER ELEKTRISCHEN LAST IN EINEM HAUSGERÄT**
CIRCUIT ASSEMBLY FOR OPERATING AN ELECTRIC LOAD, CONTROL DEVICE FOR CONTROLLING A DRIVE MOTOR OF A HOUSEHOLD APPLIANCE, HOUSEHOLD APPLIANCE AND METHOD FOR OPERATING AN ELECTRIC LOAD IN A HOUSEHOLD APPLIANCE
CIRCUIT POUR FAIRE FONCTIONNER UNE CHARGE ÉLECTRIQUE, DISPOSITIF DE COMMANDE POUR COMMANDER UN MOTEUR D'ENTRAÎNEMENT D'UN APPAREIL ÉLECTROMÉNAGER, APPAREIL ÉLECTROMÉNAGER ET PROCÉDÉ POUR FAIRE FONCTIONNER UNE CHARGE ÉLECTRIQUE DANS UN APPAREIL ÉLECTROMÉNAGER

(30) Priorität: 15.10.2010 DE 102010042490
(43) Veröffentlichungstag der Anmeldung: 21.08.2013
(73) Patentinhaber: BSH Hausgeräte GmbH, 81739 München (DE)
(72) Erfinder: ALBAYRAK, Hasan Gökcer, 13469 Berlin (DE); SEIDL, Rudolf, 93057 Regensburg (DE); SKRIPPEK, Jörg, 14641 Wustermark (DE)
(86) Internationale Anmeldenummer: PCT/EP2011/067636
(87) Internationale Veröffentlichungsnummer: WO 2012/049116

(56) Entgegenhaltungen:
- DE-A1-102006 017 852
- GB-A- 2 401 257
- US-A- 5 994 789
- US-A1- 2002 105 309
- US-A1- 2006 220 601

## Beschreibung

Die Erfindung betrifft eine Schaltungsanordnung für ein Hausgerät, die zum Betreiben einer elektrischen Last dient. Die Schaltungsanordnung umfasst einen Schaltungseingang mit einem ersten und einem zweiten Eingangsanschluss, zwischen denen eine Gleichspannung - zum Beispiel eine gleichgerichtete Netzspannung - angelegt werden kann. Die Schaltungsanordnung umfasst außerdem einen Schaltungsausgang mit einem ersten und einem zweiten Ausgangsanschluss, zwischen denen eine Zwischenkreisspannung für die elektrische Last bereitgestellt werden kann. Zwischen dem ersten und dem zweiten Ausgangsanschluss ist ein Zwischenkreiskondensator geschaltet. Die Erfindung bezieht sich außerdem auf eine Steuervorrichtung zur Ansteuerung eines Antriebsmotors eines Hausgeräts, auf ein Hausgerät mit einer solchen Steuervorrichtung sowie auf ein Verfahren zum Betreiben eines Zwischenkreises einer elektrischen Last in einem Hausgerät.

Elektrische Lasten, wie beispielsweise Antriebsmotoren, werden bekanntlich mit einer Zwischenkreisspannung aus einem Zwischenkreis versorgt. Die Zwischenkreisspannung fällt an einem Zwischenkreiskondensator ab. Die Zwischenkreisspannung stellt im Wesentlichen eine Gleichspannung dar, die zum Beispiel durch einen Brückengleichrichter - der eingangsseitig mit einem elektrischen Versorgungsnetz gekoppelt ist - aus der Netzspannung bereitgestellt wird. Die Zwischenkreisspannung kann dann durch einen Lastkreis abgegriffen werden, sie kann beispielsweise mit Hilfe eines Wechselrichters in eine Wechselspannung für eine elektrische Maschine umgewandelt werden.

Bei solchen Schaltungsanordnungen muss sichergestellt werden, dass im Falle eines Kurzschlusses - sei es im Zwischenkreiskondensator oder auch im Lastkreis - ein sicherer Zustand der Schaltungsanordnung eingenommen wird. Im Gegenstand gemäß Druckschrift DE 196 26 528 A1 ist ein elektrischer Schalter in Reihe zum Zwischenkreiskondensator geschaltet, der im Falle eines Kurzschlusses im Zwischenkreis den Stromkreis des Zwischenkreiskondensators unterbricht. Der elektrische Schalter bleibt im Betrieb des Zwischenkreises in seinem elektrisch leitenden Schaltzustand, er wird dann in seinen elektrisch sperrenden Schaltzustand geschaltet, wenn ein Kurzschluss erkannt wird. Also muss zunächst ein Kurzschluss erkannt werden, um dann den elektrischen Schalter in seinen elektrisch sperrenden Schaltzustand zu überführen. Außerdem wird im Falle eines Kurzschlusses durch den elektrischen Schalter lediglich der Stromkreis des Zwischenkreiskondensators unterbrochen, jedoch nicht der Stromkreis der elektrischen Last. Im Gegenstand gemäß Druckschrift DE 196 26 528 A1 steht somit die Detektion eines Kurzschlusses im Zwischenkreis im Vordergrund; nach Erkennen eines Kurzschlusses wird der Stromkreis des Zwischenkreiskondensators unterbrochen.

US 2002/105309 A1 und DE 10 2006 017852 A1 zeigen DC/DC-Wandler, bei denen durch Koppelmittel eine Verbindung zwischen einem Schaltungseingang und einem Kondensator periodisch hergestellt und unterbrochen wird.

Die Druckschriften U 2006/0220601 A1 und US 5,994,789 zeigen Schaltungsanordnungen für ein elektrisch angetriebenes Kraftfahrzeug. Um einen schädigenden Stromstoß beim Einschalten zu vermeiden und die Einschaltkontakte zu schonen, wird der Zwischenkreiskondensator zunächst über einen Vorwiderstand mit der Batterie verbunden.

Es ist Aufgabe der Erfindung, bei der Schaltungsanordnung der eingangs genannten Gattung Maßnahmen zu treffen, die ohne viel Aufwand das Einnehmen eines sicheren Zustands im Falle eines Kurzschlusses gewährleisten, insbesondere ohne den Kurzschluss separat erkennen zu müssen.

Diese Aufgabe wird erfindungsgemäß durch eine Schaltungsanordnung, durch eine Steuervorrichtung, durch ein Hausgerät wie auch durch ein Verfahren mit den Merkmalen gemäß jeweiligem unabhängigem Patentanspruch gelöst. Vorteilhafte Ausführungen der Erfindung sind Gegenstand der abhängigen Patentansprüche und der nachfolgenden Beschreibung.

Eine erfindungsgemäße Schaltungsanordnung für ein Hausgerät ist zum Betreiben einer elektrischen Last ausgebildet. Die Schaltungsanordnung umfasst einen Schaltungseingang mit einem ersten und einem zweiten Eingangsanschluss, zwischen denen eine Gleichspannung anlegbar ist. Zwischen einem ersten und einem zweiten Ausgangsanschluss eines Schaltungsausgangs kann eine Zwischenkreisspannung für die elektrische Last bereitgestellt werden. Die Schaltungsanordnung umfasst außerdem einen Zwischenkreiskondensator, der zwischen dem ersten und dem zweiten Ausgangsanschluss geschaltet ist. Es sind Koppelmittel bereitgestellt, die nach Anlegen der Gleichspannung den Zwischenkreiskondensator mit dem Schaltungseingang über eine elektrische Verbindung koppeln, um den Zwischenkreiskondensator mit elektrischer Energie aufzuladen, und nach Ablauf einer vorbestimmten Zeitdauer die elektrische Verbindung unterbrechen.

Also wird erfindungsgemäß der Zwischenkreiskondensator über die Koppelmittel mit dem Schaltungseingangs für eine vorbestimmte Zeitdauer gekoppelt, nämlich nach Anlegen der Gleichspannung am Schaltungseingang. Der Zwischenkreiskondensator wird somit unmittelbar nach Anlegen der Gleichspannung - die Koppelmittel stellen die elektrische Verbindung zwischen dem Zwischenkreiskondensator und dem Schaltungseingang vorzugsweise selbsttätig lediglich auf Grund der Gleichspannung bereit - über die elektrische Verbindung mit dem Schaltungseingang gekoppelt. Unabhängig von dem Ladezustand des Zwischenkreiskondensators, also unabhängig davon, ob ein Fehler im Zwischenkreis auftritt oder nicht, wird die elektrische Verbindung nach Ablauf der vorbestimmten Zeitdauer unterbrochen. In einem Fehlerfall, zum Beispiel beim Auftreten eines Kurzschlusses im Zwischenkreiskondensator und/oder im Lastkreis, wird somit sichergestellt, dass die elektrische Verbindung zwischen dem Zwischenkreiskondensator und dem Schaltungseingang über die Koppelmittel unterbrochen wird. Tritt kein Fehler auf, so können die Koppelmittel zum Beispiel überbrückt werden, was zum Beispiel durch die am Zwischenkreiskondensator anliegende Zwischenkreisspannung gesteuert werden kann.

Ein Fehlerfall, wie zum Beispiel ein Kurzschluss im Zwischenkreis, muss im Gegensatz zum Gegenstand gemäß Druckschrift DE 196 26 528 A1 in der erfindungsgemäßen Schaltungsanordnung nicht separat erkannt werden. Im Gegensatz zum Stand der Technik ist in der erfindungsgemäßen Schaltungsanordnung eine Zeitdauer festgelegt, nach welcher die durch die Koppelmittel bereitgestellte Verbindung zwischen dem Zwischenkreiskondensator und dem Schaltungseingang unterbrochen wird. Wird diese Verbindung unterbrochen und lädt sich der Zwischenkreiskondensator innerhalb der vorbestimmten Zeitdauer nicht auf - was auf Grund eines Kurzschlusses vorkommen kann -, so wird durch die Koppelmittel ein sicherer Zustand der Schaltungsanordnung gewährleistet. Werden hingegen die elektrische Verbindung nach Ablauf der vorbestimmten Zeitdauer unterbrochen und der Zwischenkreiskondensator ordnungsgemäß aufgeladen, so kann der Zwischenkreiskondensator zum Beispiel über eine weitere elektrische Verbindung mit dem Schaltungseingang gekoppelt werden, die dann die Koppelmittel überbrückt.

Unter einem Hausgerät wird vorliegend ein Gerät verstanden, dass zur Haushaltsführung eingesetzt wird. Das kann ein Haushaltsgroßgerät sein, wie beispielsweise eine Waschmaschine, ein Wäschetrockner, eine Geschirrspülmaschine, ein Gargerät, eine Dunstabzugshaube, ein Kältegeräte, eine Kühl-Gefrier-Kombination oder ein Klimagerät. Das kann aber auch ein Haushaltskleingerät sein, wie beispielsweise ein Kaffeevollautomat oder eine Küchenmaschine.

Die Zeitdauer, nach deren Ablauf die Koppelmittel die elektrische Verbindung unterbrechen, ist bevorzugt derart vorbestimmt, dass sich in einem fehlerfreien - insbesondere kurzschlussfreien - Zustand der Schaltungsanordnung und/oder der elektrischen Last der Zwischenkreiskondensator innerhalb dieser Zeitdauer auflädt. Die Zeitdauer kann also derart vorbestimmt sein, dass die Zwischenkreisspannung innerhalb dieser Zeitdauer einen vordefinierten Schwellwert überschreiten kann. Überschreitet die Zwischenkreisspannung innerhalb der vorbestimmten Zeitdauer den Schwellwert, so bedeutet dies, dass kein Kurzschluss im Zwischenkreis aufgetreten ist. Überschreitet die Zwischenkreisspannung innerhalb der vorbestimmten Zeitdauer den Schwellwert, so können Überbrückungsmittel angesteuert werden, die die Koppelmittel - die nach Ablauf der vorbestimmten Zeitdauer die elektrische Verbindung zwischen dem Zwischenkreiskondensator und dem Schaltungseingang unterbrechen - überbrücken. Diese Ausführungsform hat also den Vorteil, dass das Aufladen des Zwischenkreiskondensators in einem fehlerfreien Zustand der Schaltungsanordnung und/oder der elektrischen Last immer gewährleistet ist.

Die Koppelmittel sind bevorzugt zwischen den ersten Eingangsanschluss und den ersten Ausgangsanschluss gekoppelt, das heißt sie stellen die elektrische Verbindung zwischen dem ersten Eingangsanschluss und dem ersten Ausgangsanschluss her. Somit sind die Koppelmittel vorzugsweise nicht - wie im Stand der Technik - in Reihe zum Zwischenkreiskondensator geschaltet. Nach Ablauf der vorbestimmten Zeitdauer wird somit nicht nur der Zwischenkreiskondensator vom Schaltungseingang entkoppelt, sondern auch die elektrische Last, die an den Schaltungsausgang angeschlossen werden kann. Tritt nun ein Kurzschluss im Lastkreis auf, so wird verhindert, dass ein Kurzschlussstrom zwischen dem Schaltungseingang und dem Lastkreis fließen kann. Wie bereits ausgeführt, können die Koppelmittel dann überbrückt werden, wenn sich der Zwischenkreiskondensator innerhalb der vorbestimmten Zeitdauer aufgeladen hat. In einer Ausführungsform umfasst die Schaltungsanordnung Überbrückungsmittel, die zwischen einem Überbrückungszustand, in welchem sie die Koppelmittel elektrischen überbrücken, und einem elektrisch neutralen Entkoppelzustand schaltbar sind. Die Schaltungsanordnung kann auch Zustandserfassungsmittel zum Messen der am Zwischenkreiskondensator anliegenden Zwischenkreisspannung aufweisen. Die Zustandserfassungsmittel können die Überbrückungsmittel dann in den Überbrückungszustand schalten, wenn die Zwischenkreisspannung einen vordefinierten Schwellwert überschreitet. Somit wird sichergestellt, dass die elektrische Last im fehlerfreien Zustand der Schaltungsanordnung und/oder der elektrischen Last immer zuverlässig in Betrieb genommen werden kann. Andererseits verbleibt die elektrische Last, wie auch der Zwischenkreiskondensator vom Schaltungseingang dann entkoppelt, wenn zum Beispiel ein Kurzschluss auftritt und sich der Zwischenkreiskondensator nicht aufladen kann.

Die Überbrückungsmittel können die Koppelmittel dann überbrücken, wenn der Zwischenkreiskondensator zum Beispiel zu 95 % aufgeladen ist. Liegt am Schaltungseingang eine Gleichspannung von zum Beispiel 275 V an, so können die Überbrückungsmittel dann angesteuert werden, wenn die Zwischenkreisspannung 261 V überschreitet. Die ordnungsgemäße Ladezeit für den Zwischenkreiskondensator wird bevorzugt - zum Beispiel durch entsprechende Auswahl eines zwischen dem Schaltungseingang und dem Schaltungsausgang liegenden Ohmschen Widerstands - auf eine Zeit von 0,8 s bis 1,2 s, insbesondere auf 1 s, gesetzt. Die vorbestimmte Zeitdauer, nach welcher die Koppelmittel die elektrische Verbindung unterbrechen, kann in einem Wertebereich von 1,6 s bis 2,4 s liegen, insbesondere 2 s betragen.

Die Zustandserfassungsmittel können einen Komparator aufweisen. Nach Anlegen der Gleichspannung am Schaltungseingang liegt an einem ersten Eingang des Komparators bevorzugt eine elektrische Spannung an, die mit der Zwischenkreisspannung korreliert ist. An einem zweiten Eingang des Komparators liegt bevorzugt eine solche Spannung an, deren Amplitude den Schwellwert festlegt. Der Komparator kann dann die Überbrückungsmittel in den Überbrückungszustand schalten, wenn die Amplitude der am ersten Eingang anliegenden Spannung die Amplitude der am zweiten Eingang anliegenden Spannung überschreitet, das heißt wenn die Zwischenkreisspannung den Schwellwert überschreitet. Mit Einsatz eines Komparators gelingt es, ohne viel Aufwand die Überbrückungsmittel anzusteuern, wenn die Zwischenkreisspannung am Zwischenkreiskondensator den vorbestimmten Schwellwert überschreitet. Die Zustandserfassungsmittel können ergänzend oder alternativ jedoch eine digitale Steuereinheit - zum Beispiel einen Mikrokontroller - umfassen, die die Zwischenkreisspannung misst und die Überbrückungsmittel dann ansteuert, wenn die Zwischenkreisspannung den vorbestimmten Schwellwert überschreitet.

Die Überbrückungsmittel umfassen bevorzugt einen elektrischen Schalter, insbesondere ein Relais, mittels welchem die Koppelmittel überbrückt und somit der Schaltungsausgang mit dem Schaltungseingang gekoppelt, insbesondere direkt verbunden, werden können.

Die Koppelmittel weisen bevorzugt einen ersten Transistor, insbesondere einen MOSFET, auf, über welchen der Zwischenkreiskondensator mit dem Schaltungseingangs koppelbar ist. Der erste Transistor ist bevorzugt nach Anlegen der Gleichspannung zwischen dem ersten und dem zweiten Eingangsanschluss in seinen elektrisch leitenden Schaltzustand und nach Ablauf der vorbestimmten Zeitdauer in seinen elektrisch sperrenden Schaltzustand schaltbar. Vorzugsweise ist der erste Transistor zwischen den ersten Eingangsanschluss und den ersten Ausgangsanschluss gekoppelt. Bei dieser Ausführungsform wird also die elektrische Verbindung zwischen dem Zwischenkreiskondensator und dem Schaltungseingang über den ersten Transistor hergestellt und nach Ablauf der vorbestimmten Zeitdauer durch den ersten Transistor unterbrochen. Durch Einsatz eines Transistors kann eine einfache und zuverlässige Ansteuerung der Koppelmittel erreicht werden, nämlich durch einfaches Anlegen einer Steuerspannung am Steueranschluss des Transistors.

Der Steueranschluss des ersten Transistors kann über zumindest einen Ohmschen Widerstand mit dem Schaltungseingang gekoppelt sein. Auf diesem Wege gelingt es, unmittelbar nach Anlegen der Gleichspannung am Schaltungseingang den ersten Transistor in seinen elektrisch leitenden Schaltzustand zu überführen. Liegt die Gleichspannung am Schaltungseingang an, so liegt auch eine Steuerspannung am Steueranschluss des ersten Transistors an, und der Transistor leitet. Somit wird die elektrische Verbindung zwischen dem Zwischenkreiskondensator und dem Schaltungseingang unmittelbar nach Anlegen der Gleichspannung am Schaltungseingang quasi selbsttätig hergestellt, denn der erste Transistor wird sofort nach Anlegen der Gleichspannung leitend.

Die Koppelmittel können einen zweiten Transistor, insbesondere einen Bipolartransistor, umfassen, mittels welchem der erste Transistor in seinem Schaltzustand steuerbar ist. Dies bedeutet, dass der erste Transistor zwischen seinem elektrisch leitenden und dem elektrisch sperrenden Schaltzustand abhängig von dem jeweils augenblicklichen Schaltzustand des zweiten Transistors geschaltet wird. Bevorzugt wird der erste Transistor dann in seinen elektrisch sperrenden Schaltzustand geschaltet, wenn der zweite Transistor in seinen elektrisch leitenden Schaltzustand geschaltet wird. Der zweite Transistor wird also bevorzugt nach Ablauf der vorbestimmten Zeitdauer in seinen elektrisch leitenden Schaltzustand überführt, um dann den ersten Transistor zu sperren. Der Einsatz des zweiten Transistors hat den Vorteil, dass der erste Transistor sehr schnell nach Ablauf der vorbestimmten Zeitdauer in seinen elektrischen sperrenden Schaltzustand geschaltet werden kann. Die Koppelmittel können nämlich derart konzipiert sein, dass nach Überführen des zweiten Transistors in den elektrisch leitenden Schaltzustand der Steueranschluss des ersten Transistors mit einem anderen Potential gekoppelt wird, so dass die Steuerspannung am Steueranschluss des ersten Transistors abgebaut wird. Nach Ablauf der vorbestimmten Zeitdauer wird somit lediglich der zweite Transistor in seinen elektrisch leitenden Schaltzustand geschaltet, und die elektrische Verbindung zwischen dem Zwischenkreiskondensator und dem Schaltungseingangs wird unterbrochen.

Die Koppelmittel können einen Kondensator mit einer vorbestimmten Zeitkonstante umfassen. Dann kann die Zeitdauer, nach deren Ablauf die Koppelmittel die elektrische Verbindung zwischen dem Zwischenkreiskondensator und dem Schaltungseingang unterbrechen, von der Zeitkonstante des Kondensators abhängen. Somit kann die Zeitdauer durch die Dimensionierung des Kondensators festgelegt werden, ohne dass ein digitaler Signalprozessor eingesetzt werden muss. Der Kondensator kann derart geschaltet sein, dass die Koppelmittel die Verbindung zwischen dem Zwischenkreiskondensator und dem Schaltungseingang dann unterbrechen, wenn der Kondensator aufgeladen wird. Besonders bevorzugt ist der zweite Transistor - insbesondere Bipolartransistor - in seinem Schaltzustand abhängig von einem Ladezustand des Kondensators steuerbar. Der zweite Transistor kann zum Beispiel dann in seinen leitenden Schaltzustand geschaltet werden, wenn eine an dem Kondensator anliegende elektrische Spannung einen Grenzwert überschreitet. Dieser Grenzwert kann beispielsweise durch eine Durchlassspannung einer Zenerdiode bestimmt sein. Wird der Kondensator mit elektrischer Energie aufgeladen und überschreitet die am Kondensator anliegende Spannung die Durchlassspannung der Zenerdiode, so schaltet der zweite Transistor in seinen elektrisch leitenden Schaltzustand, und der erste Transistor wird bevorzugt in seinen elektrisch sperrenden Schaltzustand überführt.

Der Kondensator kann über zumindest einen Ohmschen Widerstand mit dem Schaltungseingang gekoppelt sein. Er kann sich somit nach Anlegen der Gleichspannung am Schaltungseingang nach und nach aufladen, nämlich innerhalb der durch seine Zeitkonstante festgelegten Zeitdauer. Wird der Kondensator aufgeladen, unterbrechen die Koppelmittel die elektrische Verbindung zwischen dem Zwischenkreiskondensator und dem Schaltungseingang. Die Koppelmittel unterbrechen diese Verbindung somit selbstständig, das heißt ohne Eingriff einer Steuereinheit, wie beispielsweise eines Mikrocontrollers.

Unter Verzicht auf eine Ansteuerung der Koppelmittel durch einen Mikrocontroller kann also erreicht werden, dass die elektrische Verbindung zwischen dem Zwischenkreiskondensator und dem Schaltungseingang unmittelbar nach Anlegen der Gleichspannung am Schaltungseingang hergestellt und nach Ablauf der vorbestimmten Zeitdauer wieder unterbrochen wird. Diese Funktionalität kann lediglich mit analogen Bauelementen erzielt werden, ohne digitale Bauelemente einsetzen zu müssen.

Eine erfindungsgemäße Steuervorrichtung ist zur Ansteuerung eines Antriebsmotors eines Hausgeräts ausgebildet. Die erfindungsgemäße Steuervorrichtung umfasst eine erfindungsgemäße Schaltungsanordnung oder eine bevorzugte Ausgestaltung derselben.

Ein erfindungsgemäßes Hausgerät umfasst einen Antriebsmotor und eine erfindungsgemäße Steuervorrichtung zur Ansteuerung des Antriebsmotors oder eine bevorzugte Ausgestaltung dieser Steuervorrichtung.

Ein erfindungsgemäßes Verfahren ist zum Betreiben eines Zwischenkreises einer elektrischen Last in einem Hausgerät ausgelegt. Es wird eine Gleichspannung zwischen einem ersten und einem zweiten Eingangsanschluss eines Schaltungseingangs des Zwischenkreises angelegt, und ein Zwischenkreiskondensator wird mit dem Schaltungseingang mit Hilfe von Koppelmitteln gekoppelt. Eine elektrische Verbindung zwischen dem Zwischenkreiskondensator und dem Schaltungseingang wird durch die Koppelmittel nach Ablauf einer vorbestimmten Zeitdauer unterbrochen. Die Koppelmittel werden mit Hilfe von Überbrückungsmitteln dann überbrückt, wenn eine am Zwischenkreiskondensator anliegende Zwischenkreisspannung innerhalb der vorbestimmten Zeitdauer einen vordefinierten Schwellwert überschreitet.

Die im Bezug auf die erfindungsgemäße Schaltungsanordnung vorgestellten bevorzugten Ausführungsformen und deren Vorteile gelten entsprechend für die erfindungsgemäße Steuervorrichtung, für das erfindungsgemäße Hausgerät und für das erfindungsgemäße Verfahren.

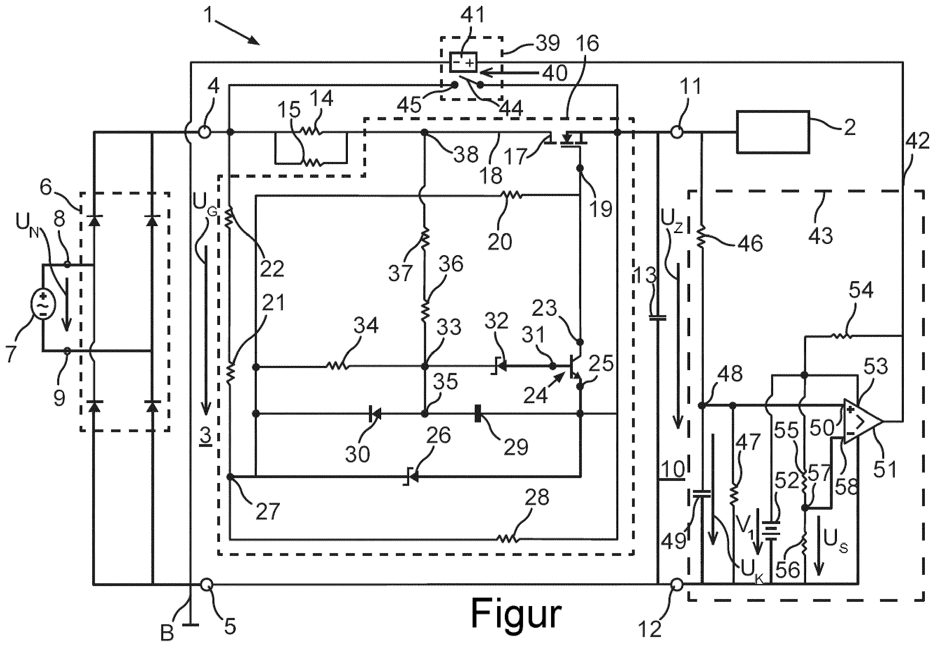

Weitere Vorteile der Erfindung ergeben sich aus den Ansprüchen, der Figur der beigefügten Zeichnung und deren nachfolgender Beschreibung. Alle vorstehend genannten Merkmale und Merkmalskombinationen sowie die nachfolgend genannten und/oder in der Figur alleine gezeigten Merkmale und Merkmalskombinationen sind nicht nur in der jeweils angegebenen Kombination, sondern auch in anderen Kombinationen oder auch in Alleinstellung verwendbar.

Die Erfindung wird nun anhand eines bevorzugten Ausführungsbeispiels, wie auch unter Bezugnahme auf die beigefügte Zeichnung näher erläutert. Deren einzige Figur zeigt in schematischer Darstellung eine Schaltungsanordnung gemäß einer Ausführungsform der Erfindung.

Eine Schaltungsanordnung 1 dient zum Betreiben einer elektrischen Last in einem Hausgerät, zum Beispiel einer elektrischen Maschine in einer Waschmaschine. Ein Lastkreis, der die elektrische Last umfasst, ist in der Figur mit 2 bezeichnet. Der Lastkreis 2 kann zum Beispiel einen Wechselrichter zum Bereitstellen einer Wechselspannung für eine permanentmagneterregte Synchronmaschine bzw. bürstenlose Gleichstrommaschine umfassen, mit welcher eine Wäschetrommel angetrieben wird.

Die Schaltungsanordnung 1 umfasst einen Schaltungseingang 3 mit einem ersten Eingangsanschluss 4 und einem zweiten Eingangsanschluss 5. Am zweiten Eingangsanschluss 5 ist ein Bezugspotential B bereitgestellt bzw. der zweite Eingangsanschluss 5 liegt am Massepotential an. Zwischen den Eingangsanschlüssen 4, 5 liegt eine Gleichspannung U_{G} an, die durch einen Gleichrichter 6 bereitgestellt wird. Der Gleichrichter 6 kann - wie in der Figur angedeutet - ein Brückengleichrichter mit vier Dioden sein. Eingangsseitig ist der Gleichrichter 6 mit einem elektrischen Versorgungsnetz 7 gekoppelt; zwischen zwei Eingangsanschlüssen 8, 9 des Gleichrichters 6 liegt eine Netzspannung U_{N} an. Die Amplitude der Netzspannung U_{N} beträgt im Ausführungsbeispiel 230 V und die Amplitude der Gleichspannung U_{G} beträgt 310 V.

Die Schaltungsanordnung 1 umfasst einen Schaltungsausgang 10 mit einem ersten Ausgangsanschluss 11 sowie einem zweiten Ausgangsanschluss 12. Am Schaltungsausgang 10 wird eine Zwischenkreisspannung U_{Z} bereitgestellt, die an einem Zwischenkreiskondensator 13 abfällt. Der Zwischenkreiskondensator 13 ist zwischen dem ersten und dem zweiten Ausgangsanschluss 11, 12 geschaltet. Der zweite Ausgangsanschluss 12 liegt am Bezugspotential B an. An den Schaltungsausgang 10 ist der Lastkreis 2 mit der elektrischen Last angeschlossen.

Mit dem ersten Eingangsanschluss 4 sind zwei Ohmsche Widerstände 14, 15 oder NTC-Widerstände (Negative Temperature Coefficient, auch unter der Bezeichnung "Heißleiter" bekannt) verbunden. Die Widerstände 14, 15 sind miteinander parallel geschaltet. Die Widerstände 14, 15 dienen dazu, so genannte Einschaltstoßströme, die nach Anlegen der Netzspannung U_{N} zum Zwischenkreiskondensator 13 fließen, zu begrenzen.

Die Schaltungsanordnung 1 umfasst Koppelmittel 16, über welche der erste Ausgangsanschluss 11 mit dem ersten Eingangsanschluss 4 gekoppelt werden kann. Die Koppelmittel 16 umfassen einen ersten Transistor 17, der im Ausführungsbeispiel ein MOSFET ist. Über den MOSFET 17 kann eine elektrische Verbindung 18 zwischen dem ersten Ausgangsanschluss 11 und dem ersten Eingangsanschluss 4 und somit zwischen dem Zwischenkreiskondensator 13 und dem Schaltungseingang 3 hergestellt werden. Ist der MOSFET 17 leitend, so ist die elektrische Verbindung 18 hergestellt. Sperrt der MOSFET 17, so ist die elektrische Verbindung 18 unterbrochen.

Ein Steueranschluss 19 des MOSFETs 17 ist über einen Ohmschen Widerstand 20, einen Ohmschen Widerstand 21 sowie einen Ohmschen Widerstand 22 mit dem ersten Eingangsanschluss 4 gekoppelt. Außerdem ist der Steueranschluss 19 des MOSFETs 17 mit einem Kollektor-Anschluss 23 eines zweiten Transistors 24 verbunden, der im Ausführungsbeispiel ein NPN-Bipolartransistor ist. Ein Emitter-Anschluss 25 des Bipolartransistors 24 ist einerseits über eine erste Zenerdiode 26 mit einem Knotenpunkt 27 gekoppelt, der zwischen dem Widerstand 21 und dem Widerstand 20 liegt. Andererseits ist der Emitter-Anschluss 25 des Bipolartransistors 24 mit dem ersten Ausgangsanschluss 11 und somit mit dem Zwischenkreiskondensator 13 direkt verbunden und über einen parallel zu der ersten Zenerdiode 26 geschalteten Ohmschen Widerstand 28 mit dem Knotenpunkt 27 gekoppelt. Die Durchlassspannung der ersten Zenerdiode 26 beträgt im Ausführungsbeispiel 10 V. Außerdem ist die Zenerdiode 26 derart zwischen dem Emitter-Anschluss 25 und dem Knotenpunkt 27 geschaltet, dass der Emitter-Anschluss 25 mit ihrer Anode und der Knotenpunkt 27 mit ihrer Katode direkt verbunden sind.

Der Emitter-Anschluss 25 des Bipolartransistors 24 ist zusätzlich über einen Kondensator 29 sowie eine Diode 30 mit dem Knotenpunkt 27 gekoppelt. Ein Steueranschluss 31 des Bipolartransistors 24 ist mit der Anode einer zweiten Zenerdiode 32 verbunden. Die Kathode der zweiten Zenerdiode 32 ist über einen Knotenpunkt 33 und einen Ohmschen Widerstand 34 mit dem Knotenpunkt 27 gekoppelt. Der zwischen der zweiten Zenerdiode 32 und dem Widerstand 34 liegende Knotenpunkt 33 ist mit einem weiteren Knotenpunkt 35 direkt verbunden, welcher zwischen dem Kondensator 29 und der Diode 30 liegt. Außerdem ist der Knotenpunkt 33 über zwei Ohmsche Widerstände 36, 37 mit einem Knotenpunkt 38 gekoppelt, welcher zwischen dem MOSFET 17 und der Parallelschaltung aus den Widerständen 14, 15 liegt.

Die Durchlassspannung der zweiten Zenerdiode 32 beträgt im Ausführungsbeispiel 6,8 V. Dies bedeutet, dass die zweite Zenerdiode 32 dann niederohmig wird, wenn die an ihr abfallende Spannung 6,8 V überschreitet. Wird die zweite Zenerdiode 32 - auf Grund der am Kondensator 29 abfallenden Spannung - niederohmig, so schaltet auch der Bipolartransistor 24 in seinen elektrisch leitenden Schaltzustand.

Die Schaltungsanordnung 1 umfasst außerdem Überbrückungsmittel 39, die die Koppelmittel 16 überbrücken, nämlich in einem Überbrückungszustand. Die Überbrückungsmittel 39 umfassen im Ausführungsbeispiel ein Relais 40, über welches der erste Ausgangsanschluss 11 mit dem ersten Eingangsanschluss 4 und somit der Zwischenkreiskondensator 13 mit dem Schaltungseingang 3 direkt verbunden werden kann. Das Relais 40 umfasst eine Spule 41, die einerseits mit dem Bezugspotential B und andererseits mit einem Ausgang 42 von Zustandserfassungsmitteln 43 verbunden ist. Fließt über die Spule 41 elektrischer Gleichstrom, so steht ein bewegliches Kontaktelement 44 in Kontakt mit einem ortsfesten Kontaktelement 45, und der Zwischenkreiskondensator 13 ist direkt mit dem Schaltungseingang 3 verbunden. Im Überbrückungszustand überbrücken die Überbrückungsmittel 39 also nicht nur die Koppelmittel 16, sondern auch die Parallelschaltung aus den Widerständen 14, 15.

Die Zustandserfassungsmittel 43 dienen zum Erfassen eines Ladezustands des Zwischenkreiskondensators 13, und genauer gesagt zum Messen der Zwischenkreisspannung U_{Z}. Die Zwischenkreisspannung U_{Z} wird mit Hilfe eines Spannungsteilers mit zwei Ohmschen Widerständen 46, 47 abgegriffen. Zwischen einem Knotenpunkt 48 - der zwischen den Widerständen 46, 47 liegt - und dem Bezugspotential B liegt eine mit der Zwischenkreisspannung U_{Z} korrelierte Spannung U_{K} an. Die Spannung U_{K} fällt an einem Kondensator 49 ab, welcher zwischen dem Knotenpunkt 48 und dem Bezugspotential B geschaltet ist. Der Knotenpunkt 48 ist mit einem positiven Eingang 50 eines analogen Komparators 51 direkt verbunden, so dass die Spannung U_{K} am positiven Eingang 50 anliegt. Die Zustandserfassungsmittel 43 umfassen außerdem eine Gleichspannungsquelle 52, die eine Gleichspannung V₁ bereitstellt. Die Gleichspannungsquelle 52 ist mit einem Versorgungsanschluss 53 des Komparators 51 verbunden, wie auch über einen hochohmigen Widerstand 54 mit dem Ausgang 42 der Zustandserfassungsmittel 43 gekoppelt. Der Ausgang 42 der Zustandserfassungsmittel 43 stellt gleichzeitig einen Ausgang des Komparators 51 dar. Die Gleichspannung V₁ wird mit Hilfe eines Spannungsteilers mit zwei Ohmschen Widerständen 55, 56 abgegriffen; eine Schwellenspannung U_{S} - ein Bruchteil der abgegriffenen Gleichspannung V₁ - liegt zwischen einem zwischen den Widerständen 55, 56 liegenden Knotenpunkt 57 und dem Bezugspotential B an. Der Knotenpunkt 57 ist mit einem negativen Eingang 58 des Komparators 51 direkt verbunden, so dass die Schwellenspannung U_{S} am negativen Eingang 58 des Komparators 51 anliegt. Die Amplitude der Schwellenspannung U_{S} entspricht einem Schwellwert des Komparators 51. Überschreitet die Amplitude der Spannung U_{K} den Schwellwert, so liegt am Ausgang 42 des Komparators 51 die Gleichspannung V₁ an. Ist die Amplitude der Spannung U_{K} geringer als die Amplitude der Schwellenspannung U_{S}, so liegt der Ausgang 42 am Bezugspotential B an.

Die Überbrückungsmittel 39 werden also dann in den Überbrückungszustand geschaltet, wenn die Amplitude der Spannung U_{K} den Schwellwert überschreitet. Die Zustandserfassungsmittel 43 sind so konzipiert, dass sie die Überbrückungsmittel 39 dann in den Überbrückungszustand schalten, wenn der Zwischenkreiskondensator 13 zum Beispiel zu 95 % aufgeladen ist bzw. die Zwischenkreisspannung U_{Z} einen Schwellwert erreicht. Dieser Schwellwert kann zum Beispiel in einem Wertebereich von 200V bis 310V, bevorzugt in einem Wertebereich von 250V bis 310V liegen. Zum Beispiel kann dieser Schwellwert 261 V betragen.

Nachfolgend wird die Funktionsweise der Schaltungsanordnung 1 näher erläutert. Wird die Netzspannung U_{N} zwischen den Eingangsanschlüssen 8, 9 angelegt, so erzeugt der Gleichrichter 6 die Gleichspannung U_{G}. Zu diesem Zeitpunkt ist das Relais 40 geöffnet, wie auch der MOSFET 17 und der Bipolartransistor 24. Der Steueranschluss 19 des MOSFETs 17 greift eine Spannung am ersten Eingangsanschluss 4 ab, nämlich über die Widerstände 20, 21 und 22. Der MOSFET 17 wird leitend, und die elektrische Verbindung 18 zwischen dem Zwischenkreiskondensator 13 und dem Schaltungseingang 3 ist hergestellt. Die Spannung am Knotenpunkt 27 beträgt etwa 10 V. Der Zwischenkreiskondensator 13 ist noch entladen, so dass der erste Ausgangsanschluss 11 ein Bezugspotential für die Koppelmittel 16 darstellt.

Nach und nach lädt sich der Zwischenkreiskondensator 13 auf Grund der elektrischen Verbindung 18 über den MOSFET 17 auf. Ist die Schaltungsanordnung fehlerfrei und weist keinen Kurzschluss - sei es im Zwischenkreiskondensator 13 oder im Lastkreis 2 - auf, so kann sich der Zwischenkreiskondensator 13 ordnungsgemäß aufladen, nämlich innerhalb einer dafür vorgesehenen Zeit. Wird der Zwischenkreiskondensator 13 aufgeladen, so überschreitet die Amplitude der Spannung U_{K} die Amplitude der Schwellenspannung U_{S}, und die Zustandserfassungsmittel 43 schalten die Überbrückungsmittel 39 in den Überbrückungszustand. Im Überbrückungszustand ist das Relais 40 geschlossen, und der Zwischenkreiskondensator 13 sowie der Lastkreis 2 sind direkt mit dem Schaltungseingang 3 verbunden.

Tritt jedoch ein Kurzschluss im Stromkreis des Zwischenkreiskondensators 13 auf, so kann sich der Zwischenkreiskondensator 13 nicht ordnungsgemäß aufladen, und es fließt ein Kurzschlussstrom. In diesem Falle verbleibt das Relais 40 im offenen Schaltzustand, da die Amplitude der Spannung U_{K} den Schwellwert des Komparators 51 nicht überschreitet.

Im Falle eines Kurzschlusses sorgen die Koppelmittel 16 dafür, dass der Zwischenkreiskondensator 13, wie auch der Lastkreis 2 von dem Schaltungseingangs 3 entkoppelt werden. Nach Anlegen der Netzspannung U_{N} zwischen den Eingangsanschlüssen 8, 9 und nach Erzeugen der Gleichspannung U_{G} greift nämlich der Kondensator 29 eine Spannung am Knotenpunkt 38 ab, nämlich über die Widerstände 36, 37. Während sich der MOSFET 17 im leitenden Schaltzustand befindet, lädt sich somit der Kondensator 29 nach und nach auf, bis die Spannung an der zweiten Zenerdiode 32 ihre Durchlassspannung überschreitet. Die für das Aufladen des Kondensators 29 erforderliche Zeitdauer hängt dabei von seiner Zeitkonstante, das heißt von der Dimensionierung des Kondensators 29, wie auch von der Dimensionierung der Widerstände 36, 37, ab. Die Zeitdauer kann zum Beispiel 2 s betragen. Überschreitet die am Kondensator 29 abfallende Spannung die Durchlassspannung der Zenerdiode 32, fließt über den Steueranschluss 31 und den Emitter-Anschluss 25 des Bipolartransistors 24 Basisstrom. Auf Grund dieses Basisstromes wird der Bipolartransistor 24 leitend, und es fließt Strom über den Kollektor-Anschluss 23 und den Emitter-Anschluss 25. Die am Steueranschluss 19 des MOSFETs 17 anliegende Steuerspannung wird somit abgebaut, und der MOSFET 17 sperrt. Also ist der Schaltzustand des MOSFETs 17 abhängig von dem Schaltzustand des Bipolartransistors 24. Der Schaltzustand des Bipolartransistors 24 wiederum hängt von dem Ladezustand des Kondensators 29 ab.

Wird also der Kondensator 29 nach Ablauf einer vorbestimmten Zeitdauer aufgeladen, so wird die elektrische Verbindung 18 unterbrochen. Die Koppelmittel 16 sind somit so konzipiert, dass der MOSFET 17 selbsttätig sowohl in seinen elektrisch leitenden Schaltzustand - nach Anlegen der Netzspannung U_{N} - als auch in seinen elektrisch sperrenden Schaltzustand - wenn der Kondensator 29 aufgeladen ist - schaltet. Die elektrische Verbindung 18 wird somit nach Ablauf der vorbestimmten Zeitdauer bzw. nach Aufladen des Kondensators 29 unabhängig von dem tatsächlichen Ladezustand des Zwischenkreiskondensators 13 unterbrochen. Aus diesem Grund ist die Zeitdauer des Aufladens des Kondensators 29 so vorbestimmt bzw. die Bauelemente der Koppelmittel 16 sind derart gewählt, dass sich der Zwischenkreiskondensator 13 innerhalb dieser Zeitdauer aufladen kann und die Koppelmittel 16 durch die Überbrückungsmittel 39 überbrückt werden können. Die Aufladezeit des Zwischenkreiskondensators 13 kann im fehlerfreien Fall 1 s betragen. Wird also der Zwischenkreiskondensator 13 ordnungsgemäß aufgeladen, so werden die Koppelmittel 16 durch das Relais 40 überbrückt, bevor die elektrische Verbindung 18 unterbrochen wird. Wird der Zwischenkreiskondensator 13 innerhalb der vorbestimmten Zeitdauer auf Grund eines Kurzschlusses nicht aufgeladen, so verbleibt das Relais 40 im offnen Schaltzustand, und die elektrische Verbindung 18 wird unterbrochen.

Insgesamt wird also eine Schaltungsanordnung 1 für einen Zwischenkreis einer elektrischen Last geschaffen, welche das Einnehmen eines sicheren Zustands im Falle eines Kurzschlusses - sei es in dem Zwischenkreiskondensator 13 oder im Lastkreis 2 - ermöglicht. Der Lastkreis 2 wird mit Hilfe von Koppelmitteln 16 über eine elektrische Verbindung 18 mit dem Schaltungseingang 3 gekoppelt. Nach Ablauf einer vorbestimmten und von einer Zeitkonstante des Kondensators 29 abhängigen Zeitdauer wird die elektrische Verbindung 18 unterbrochen. Wird innerhalb der vorbestimmten Zeitdauer der Zwischenkreiskondensator 13 aufgeladen und erreicht die Zwischenkreisspannung U_{Z} einen vorbestimmten Schwellwert, werden die Koppelmittel 16 mit Hilfe von Überbrückungsmitteln 39 überbrückt und die elektrische Last in Betrieb genommen.

### Bezugszeichenliste

- 1: Schaltungsanordnung
- 2: Lastkreis
- 3: Schaltungseingang
- 4: Eingangsanschluss
- 5: Eingangsanschluss
- 6: Gleichrichter
- 7: Versorgungsnetz
- 8: Eingangsanschluss
- 9: Eingangsanschluss
- 10: Schaltungsausgang
- 11: Ausgangsanschluss
- 12: Ausgangsanschluss
- 13: Zwischenkreiskondensator
- 14: Widerstand
- 15: Widerstand
- 16: Koppelmittel
- 17: MOSFET
- 18: elektrische Verbindung
- 19: Steueranschluss
- 20: Widerstand
- 21: Widerstand
- 22: Widerstand
- 23: Kollektor-Anschluss
- 24: Bipolartransistor
- 25: Emitter-Anschluss
- 26: Zenerdiode
- 27: Knotenpunkt
- 28: Widerstand
- 29: Kondensator
- 30: Diode
- 31: Steueranschluss
- 32: Zenerdiode
- 33: Knotenpunkt
- 34: Widerstand
- 35: Knotenpunkt
- 36: Widerstand
- 37: Widerstand
- 38: Knotenpunkt
- 39: Überbrückungsmittel
- 40: Relais
- 41: Spule
- 42: Ausgang
- 43: Zustandserfassungsmittel
- 44: Kontaktelement
- 45: Kontaktelement
- 46: Widerstand
- 47: Widerstand
- 48: Knotenpunkt
- 49: Kondensator
- 50: Eingang
- 51: Komparator
- 52: Gleichspannungsquelle
- 53: Versorgungsanschluss
- 54: Widerstand
- 55: Widerstand
- 56: Widerstand
- 57: Knotenpunkt
- 58: Eingang
- U_{G}: Gleichspannung
- U_{N}: Netzspannung
- U_{Z}: Zwischenkreisspannung
- U_{K}: Spannung
- U_{S}: Schwellenspannung
- V₁: Gleichspannung
- B: Bezugspotential

## Patentansprüche

1. Schaltungsanordnung (1) zum Betreiben einer elektrischen Last, für ein Hausgerät, mit
- einem Schaltungseingang (3) mit einem ersten und einem zweiten Eingangsanschluss (4, 5), zwischen denen eine Gleichspannung (U_{G}) anlegbar ist,
- einem Schaltungsausgang (10) mit einem ersten und einem zweiten Ausgangsanschluss (11, 12), zwischen denen eine Zwischenkreisspannung (U_{Z}) für die elektrische Last bereitstellbar ist,
- einem zwischen dem ersten und dem zweiten Ausgangsanschluss (11, 12) geschalteten Zwischenkreiskondensator (13),
- Koppelmittel (16), die nach Anlegen der Gleichspannung (U_{G}) den Zwischenkreiskondensator (13) mit dem Schaltungseingang (3) über eine elektrische Verbindung (18) koppeln, um den Zwischenkreiskondensator (13) mit elektrischer Energie aufzuladen,
- Überbrückungsmittel (39), die zwischen einem Überbrückungszustand, in welchem sie die Koppelmittel (16) elektrisch überbrücken, und einem elektrisch neutralen Entkoppelzustand schaltbar sind, und
- Zustandserfassungsmittel (43) zum Messen der am Zwischenkreiskondensator (13) anliegenden Zwischenkreisspannung (U_{Z}), die dazu ausgelegt sind, die Überbrückungsmittel (39) dann in den Überbrückungszustand zu schalten, wenn die Zwischenkreisspannung (U_{Z}) einen vordefinierten Schwellwert überschreitet,
**dadurch gekennzeichnet, dass**
die Koppelmittel (16) nach Ablauf einer vorbestimmten Zeitdauer unabhängig von dem Ladezustand des Zwischenkreiskondensators (13) die elektrische Verbindung (18) unterbrechen.

2. Schaltungsanordnung (1) nach Anspruch 1, **dadurch gekennzeichnet, dass** die Zeitdauer, nach deren Ablauf die Koppelmittel (16) die elektrische Verbindung (18) unterbrechen, derart vorbestimmt ist, dass sich in einem fehlerfreien Zustand der Schaltungsanordnung (1) und/oder der elektrischen Last der Zwischenkreiskondensator (13) innerhalb dieser Zeitdauer auflädt und hierdurch die Zwischenkreisspannung (U_{Z}) einen vordefinierten Schwellwert überschreitet.

3. Schaltungsanordnung (1) nach einem der vorhergehenden Ansprüche, **dadurch gekennzeichnet, dass** die Zustandserfassungsmittel (43) einen Komparator (51) aufweisen und nach Anlegen der Gleichspannung (U_{G}) am Schaltungseingang (3) eine elektrische Spannung (U_{K}) an einem ersten Eingang (50) des Komparators (51) anliegt, die mit der Zwischenkreisspannung (U_{Z}) korreliert ist, und an einem zweiten Eingang (58) des Komparators (51) eine solche Spannung (U_{S}) anliegt, durch deren Amplitude der Schwellwert festgelegt ist, wobei der Komparator (51) dazu ausgelegt ist, die Überbrückungsmittel (39) dann in den Überbrückungszustand zu schalten, wenn die Amplitude der am ersten Eingang (50) anliegenden Spannung (U_{K}) die Amplitude der am zweiten Eingang (58) anliegenden Spannung (U_{S}) überschreitet.

4. Schaltungsanordnung (1) nach einem der vorigen Ansprüche, **dadurch gekennzeichnet, dass** die Koppelmittel (16) einen ersten Transistor (17), insbesondere einen MOSFET, umfassen, über welchen der Zwischenkreiskondensator (13) mit dem Schaltungseingang (3) koppelbar ist und der nach Anlegen der Gleichspannung (U_{G}) zwischen dem ersten und dem zweiten Eingangsanschluss (4, 5) in seinen elektrisch leitenden Schaltzustand und nach Ablauf der vorbestimmten Zeitdauer in seinen elektrisch sperrenden Schaltzustand schaltbar ist.

5. Schaltungsanordnung (1) nach Anspruch 4, **dadurch gekennzeichnet, dass** ein Steueranschluss (19) des ersten Transistors (17) über zumindest einen Ohmschen Widerstand (20, 21, 22) mit dem Schaltungseingang (3) gekoppelt ist.

6. Schaltungsanordnung (1) nach einem der Ansprüche 4 und 5, **dadurch gekennzeichnet, dass** die Koppelmittel (16) einen zweiten Transistor (24), insbesondere einen Bipolartransistor, umfassen, mittels welchem der erste Transistor (17) in seinem Schaltzustand steuerbar ist.

7. Schaltungsanordnung (1) nach Anspruch 6, **dadurch gekennzeichnet, dass** der erste Transistor (17) dann in seinen elektrisch sperrenden Schaltzustand schaltet, wenn der zweite Transistor (24) in seinen elektrisch leitenden Schaltzustand schaltet.

8. Schaltungsanordnung (1) nach einem der vorigen Ansprüche, **dadurch gekennzeichnet, dass** die Koppelmittel (16) einen Kondensator (29) mit einer vorbestimmten Zeitkonstante umfassen und die Zeitdauer, nach deren Ablauf die Koppelmittel (16) die elektrische Verbindung (18) zwischen dem Zwischenkreiskondensator (13) und dem Schaltungseingang (3) unterbrechen, von der Zeitkonstante des Kondensators (29) abhängt.

9. Schaltungsanordnung (1) nach Anspruch 7 und Anspruch 8, **dadurch gekennzeichnet, dass** abhängig von einem Ladezustand des Kondensators (29) der zweite Transistor (24) in seinem Schaltzustand steuerbar ist, wobei bevorzugt der zweite Transistor (24) dann in seinen leitenden Schaltzustand schaltet, wenn eine an dem Kondensator (29) anliegende elektrische Spannung einen Grenzwert überschreitet.

10. Schaltungsanordnung (1) nach Anspruch 9, **dadurch gekennzeichnet, dass** eine Zenerdiode (32) mit einem Steueranschluss (31) des zweiten Transistors (24) gekoppelt ist und der Grenzwert durch die Durchlassspannung der Zenerdiode (32) bestimmt ist.

11. Schaltungsanordnung (1) nach einem der Ansprüche 8 bis 10, **dadurch gekennzeichnet, dass** der Kondensator über zumindest einen Ohmschen Widerstand (37, 36) mit dem Schaltungseingang (3) gekoppelt ist.

12. Steuervorrichtung zur Ansteuerung eines Antriebsmotors eines Hausgeräts, mit einer Schaltungsanordnung (1) nach einem der vorhergehenden Ansprüche.

13. Hausgerät mit einem Antriebsmotor und einer Steuervorrichtung nach Anspruch 12.

14. Verfahren zum Betreiben eines Zwischenkreises einer elektrischen Last in einem Hausgerät, mit den Schritten:
a. Anlegen einer Gleichspannung (U_{G}) zwischen einem ersten und einem zweiten Eingangsanschluss (4, 5) eines Schaltungseingangs (3) des Zwischenkreises und Koppeln eines Zwischenkreiskondensators (13) mit dem Schaltungseingang (3) mithilfe von Koppelmitteln (16),
b. Unterbrechen einer elektrischen Verbindung (18) zwischen dem Zwischenkreiskondensator (13) und dem Schaltungseingang (3) durch die Koppelmittel (16) nach Ablauf einer vorbestimmten Zeitdauer nach Anlegen der Gleichspannung (U_{G}) unabhängig von dem Ladezustand des Zwischenkreiskondensators (13), und
c. Überbrücken der Koppelmittel (16) mithilfe von Überbrückungsmitteln (39) dann, wenn eine am Zwischenkreiskondensator (13) anliegende Zwischenkreisspannung (U_{Z}) innerhalb der vorbestimmten Zeitdauer einen vordefinierten Schwellwert überschreitet.

## Claims

1. Circuit assembly (1) for operating an electric load, for a household appliance, having
- a circuit input (3) having a first and a second input terminal (4, 5), between which a DC voltage (U_{G}) can be applied,
- a circuit output (10) having a first and a second output terminal (11, 12), between which an intermediate circuit voltage (U_{Z}) can be provided for the electric load,
- an intermediate circuit capacitor (13) switched between the first and the second output terminal (11, 12),
- coupling means (16) which after application of the DC voltage (U_{G}) couple the intermediate circuit capacitor (13) with the circuit input (3) via an electrical connection (18) in order to charge the intermediate circuit capacitor (13) with electric energy,
- bridging means (39) which can be switched between a bridging state in which they electrically bridge the coupling means (16), and an electrically neutral decoupling state, and
- state detection means (43) for measuring the intermediate circuit voltage (U_{Z}) present at the intermediate circuit capacitor (13), which are designed to switch the bridging means (39) to the bridging state whenever the intermediate circuit voltage (U_{Z}) exceeds a predefined threshold,
**characterised in that**
the coupling means (16) interrupt the electrical connection (18) after a predefined time period has elapsed, regardless of the charge state of the intermediate circuit capacitor (13).

2. Circuit assembly (1) according to claim 1, **characterised in that** the time period after which the coupling means (16) interrupt the electrical connection (18) is predetermined such that in an error-free state of the circuit assembly (1) and/or of the electric load the intermediate circuit capacitor (13) charges up within this time period and thereby the intermediate circuit voltage (U_{Z}) exceeds a predefined threshold.

3. Circuit assembly (1) according to one of the preceding claims, **characterised in that** the state detection means (43) have a comparator (51) and after application of the DC voltage (U_{G}) at the circuit input (3) an electric voltage (U_{K}) is present at a first input (50) of the comparator (51), and is correlated with the intermediate circuit voltage (U_{Z}), and at a second input (58) of the comparator (51) such a voltage (U_{S}) is present, from the amplitude of which the threshold is determined, wherein the comparator (51) is designed to switch the bridging means (39) to the bridging state whenever the amplitude of the voltage (U_{K}) present at the first input (50) exceeds the amplitude of the voltage (U_{S}) present at the second input (58).

4. Circuit assembly (1) according to one of the preceding claims, **characterised in that** the coupling means (16) comprise a first transistor (17), in particular a MOSFET, via which the intermediate circuit capacitor (13) can be coupled to the circuit input (3) and which after application of the DC voltage (U_{G}) between the first and the second input terminal (4, 5) in its electrically conductive switching state and after the predetermined time period has elapsed can be switched to its electrically blocking switching state.

5. Circuit assembly (1) according to claim 4, **characterised in that** a control terminal (19) of the first transistor (17) is coupled to the circuit input (3) via at least one ohmic resistance (20, 21, 22).

6. Circuit assembly (1) according to one of claims 4 and 5, **characterised in that** the coupling means (16) comprise a second transistor (24), in particular a bipolar transistor, by means of which the first transistor (17) can be controlled in its switching state.

7. Circuit assembly (1) according to claim 6, **characterised in that** the first transistor (17) switches to its electrically blocking switching state whenever the second transistor (24) switches to its electrically conductive switching state.

8. Circuit assembly (1) according to one of the preceding claims, **characterised in that** the coupling means (16) comprise a capacitor (29) with a predetermined time constant and the time period after which the coupling means (16) interrupt the electrical connection (18) between the intermediate circuit capacitor (13) and the circuit input (3) is dependent on the time constant of the capacitor (29).

9. Circuit assembly (1) according to claim 7 and claim 8, **characterised in that** depending on a charge state of the capacitor (29) the second transistor (24) can be controlled in its switching state, wherein preferably the second transistor (24) switches to its conducting switching state whenever an electrical voltage present at the capacitor (29) exceeds a limit value.

10. Circuit assembly (1) according to claim 9, **characterised in that** a Zener diode (32) is coupled to a control terminal (31) of the second transistor (24), and the limit value is determined by the forward voltage of the Zener diode (32).

11. Circuit assembly (1) according to one of claims 8 to 10, **characterised in that** the capacitor is coupled to the circuit input (3) via at least one ohmic resistance (37, 36).

12. Control device for controlling a drive motor of a household appliance, having a circuit assembly (1) according to one of the preceding claims.

13. Household appliance having a drive motor and a control device according to claim 12.

14. Method for operating an intermediate circuit of an electric load in a household appliance, comprising the steps of:
a. Applying a DC voltage (U_{G}) between a first and a second input terminal (4, 5) of a circuit input (3) of the intermediate circuit, and coupling an intermediate circuit capacitor (13) to the circuit input (3) with the aid of coupling means (16),
b. Interrupting an electrical connection (18) between the intermediate circuit capacitor (13) and the circuit input (3) by the coupling means (16) after a predetermined time period after application of the DC voltage (U_{G}) has elapsed, regardless of the charge state of the intermediate circuit capacitor (13), and
c. Bridging the coupling means (16) with the aid of bridging means (39) whenever an intermediate circuit voltage (U_{Z}) present at the intermediate circuit capacitor (13) exceeds a predefined threshold within the predetermined time period.

## Revendications

1. Agencement de circuit (1) destiné au fonctionnement d'une charge électrique, pour un appareil ménager, comprenant
- une entrée de circuit (3) munie d'une première et d'une deuxième borne d'entrée (4, 5) entre lesquelles une tension continue (U_{G}) peut être appliquée,
- une sortie de circuit (10) munie d'une première et d'une deuxième bornes de sortie (11, 12) entre lesquelles une tension de circuit intermédiaire (U_{Z}) peut être mise à disposition pour la charge électrique,
- un condensateur de circuit intermédiaire (13) commuté entre la première et la deuxième borne de sortie (11, 12),
- des moyens de couplage (16) qui, après l'application de la tension continue (U_{G}), accouplent le condensateur de circuit intermédiaire (13) à l'entrée de circuit (3) par l'intermédiaire d'une liaison électrique (18) afin de charger le condensateur de circuit intermédiaire (13) avec de l'énergie électrique,
- des moyens de pontage (39) qui sont commutables entre un état de pontage, dans lequel ils pontent électriquement les moyens de couplage (16), et un état de découplage électriquement neutre, et
- des moyens de détection d'état (43) destinés à mesurer la tension de circuit intermédiaire (U_{Z}) présente sur le condensateur de circuit intermédiaire (13), lesquels sont conçus pour commuter les moyens de pontage (39) en l'état de pontage lorsque la tension de circuit intermédiaire (U_{Z}) dépasse une valeur seuil prédéfinie,
**caractérisé en ce que**
- les moyens de couplage (16), après l'expiration d'une durée prédéterminée, interrompent la liaison électrique (18) indépendamment de l'état de charge du condensateur de circuit intermédiaire (13).

2. Agencement de circuit (1) selon la revendication 1, **caractérisé en ce que** la durée, à l'expiration de laquelle les moyens de couplage (16) interrompent la liaison électrique (18), est prédéterminée de manière à ce que, dans un état sans défaillance de l'agencement de circuit (1) et/ou de la charge électrique, le condensateur de circuit intermédiaire (13) se charge pendant cette durée et qu'ainsi la tension de circuit intermédiaire (U_{Z}) dépasse une valeur seuil prédéfinie.

3. Agencement de circuit (1) selon l'une quelconque des revendications précédentes, **caractérisé en ce que** les moyens de détection d'état (43) présentent un comparateur (51) et **en ce qu'**après l'application de la tension continue (U_{G}) à l'entrée de circuit (3), une tension électrique (U_{K}) est présente à une première entrée (50) du comparateur (51), laquelle est corrélée avec la tension de circuit intermédiaire (U_{Z}), et **en ce qu'**à une deuxième entrée (58) du comparateur (51), une telle tension (U_{S}) est présente, en raison de l'amplitude de laquelle la valeur seuil est fixée, le comparateur (51) étant conçu pour commuter les moyens de pontage (39) en l'état de pontage lorsque l'amplitude de la tension (U_{K}) présente à la première entrée (50) dépasse l'amplitude de la tension (U_{S}) présente à la deuxième entrée (58).

4. Agencement de circuit (1) selon l'une quelconque des revendications précédentes, **caractérisé en ce que** les moyens de couplage (16) comprennent un premier transistor (17), notamment un MOSFET, par l'intermédiaire duquel le condensateur de circuit intermédiaire (13) peut être couplé à l'entrée de circuit (3) et lequel, après l'application de la tension continue (U_{G}) entre la première et la deuxième borne d'entrée (4, 5), peut être commuté dans son état de commutation électro-conducteur, et, après l'expiration de la durée prédéterminée, peut être commuté dans son état de commutation électriquement bloquant.

5. Agencement de circuit (1) selon la revendication 4, **caractérisé en ce qu'**une borne de commande (19) du premier transistor (17) est couplée à l'entrée de circuit (3) par l'intermédiaire d'au moins une résistance ohmique (20, 21, 22).

6. Agencement de circuit (1) selon l'une quelconque des revendications 4 et 5, **caractérisé en ce que** les moyens de couplage (16) comprennent un deuxième transistor (24), notamment un transistor bipolaire, au moyen duquel le premier transistor (17) peut être commandé dans son état de commutation.

7. Agencement de circuit (1) selon la revendication 6, **caractérisé en ce que** le premier transistor (17) commute dans son état de commutation électriquement bloquant lorsque le deuxième transistor (24) commute dans son état de commutation électro-conducteur.

8. Agencement de circuit (1) selon l'une quelconque des revendications précédentes, **caractérisé en ce que** les moyens de couplage (16) comprennent un condensateur (29) ayant une constante de temps prédéterminée et **en ce que** la durée, après l'expiration de laquelle les moyens de couplage (16) interrompent la liaison électrique (18) entre le condensateur de circuit intermédiaire (13) et l'entrée de circuit (3), dépend de la constante de temps du condensateur (29).

9. Agencement de circuit (1) selon la revendication 7 et la revendication 8, **caractérisé en ce qu'**en fonction d'un état de charge du condensateur (29), le deuxième transistor (24) peut être commandé dans son état de commutation, de préférence le deuxième transistor (24) étant commuté dans son état de commutation conducteur lorsqu'une tension électrique présente sur le condensateur (29) dépasse une valeur seuil.

10. Agencement de circuit (1) selon la revendication 9, **caractérisé en ce qu'**une diode Zener (32) est couplée à une borne de commande (31) du deuxième transistor (24) et **en ce que** la valeur seuil est déterminée par la tension de passage de la diode Zener (32).

11. Agencement de circuit (1) selon l'une quelconque des revendications 8 à 10, **caractérisé en ce que** le condensateur est couplé à l'entrée de circuit (3) par l'intermédiaire d'au moins une résistance ohmique (37, 36).

12. Dispositif de commande destiné à la commande d'un moteur d'entraînement d'un appareil ménager, comprenant un agencement de circuit (1) selon l'une quelconque des revendications précédentes.

13. Appareil ménager comprenant un moteur d'entraînement et un dispositif de commande selon la revendication 12.

14. Procédé de fonctionnement d'un circuit intermédiaire d'une charge électrique dans un appareil ménager, comprenant les étapes :
a. application d'une tension continue (U_{G}) entre une première et une deuxième borne d'entrée (4, 5) d'une entrée de circuit (3) du circuit intermédiaire et couplage d'un condensateur de circuit intermédiaire (13) à l'entrée de circuit (3) à l'aide de moyens de couplage (16),
b. interruption d'une liaison électrique (18) entre le condensateur de circuit intermédiaire (13) et l'entrée de circuit (3) par les moyens de couplage (16) après l'expiration d'une durée prédéterminée, après l'application de la tension continue (U_{G}), indépendamment de l'état de charge du condensateur de circuit intermédiaire (13), et
c. pontage des moyens de couplage (16) à l'aide de moyens de pontage (39) lorsqu'une tension de circuit intermédiaire (U_{Z}) présente sur le condensateur de circuit intermédiaire (13) dépasse une valeur seuil prédéfinie pendant la durée prédéterminée.
